# EUROPEAN PATENT APPLICATION

(11) **EP 2 685 600 A1**
(43) Date of publication of application: **15.01.2014**
(21) Application number: 12175668.8
(22) Date of filing: 10.07.2012
(51) Int. Cl.: H02J 13/00, H02J 3/14, G06F 1/32

(54) **Energy management gateway and method thereof**

(71) Applicant: ABB Research Ltd., 8050 Zürich (CH)
(72) Inventor: Hansen, Ewa, 722 23 Västerås (SE); Rossebø, Judith, N-0852 Oslo (NO); Rizvanovic, Larisa, 724 71 Västerås (SE); Stoll, Pia, 72346 Västerås (SE); Lennvall, Tomas, 722 21 Västerås (SE)
(74) Representative: Partner, Lothar

(57) **Abstract**

The present invention relates to a method of an energy management gateway (101) being associated with an electricity meter (103) and with a plurality of electricity outlet sockets (102). The method comprises detecting a pattern (402) of consumption of electricity originating from one of the outlet sockets by means of the electricity meter; identifying the outlet socket from which the pattern originates; determining that the detected pattern fulfils a criterion, whereby the pattern is recognised as a pattern formed by an association device (401) connected to said outlet socket; outputting via a user interface an indication that the identified outlet socket is ready to be associated with an electrical load type; receiving via the user interface an indication about with which electrical load type the identified outlet socket should be associated; and associating the identified outlet socket with the load type in accordance with the received indication.

## Description

### TECHNICAL FIELD

The invention relates to an energy management gateway comprising a processor, a storage unit and a user interface, and being associated with an electricity meter and with a plurality of electricity outlet sockets. The invention also relates to a method of an energy management gateway, as well as to a computer program and a computer program product.

### BACKGROUND

According to the European Council (European Commission Research), the energy consumption of houses and buildings, taking into account the whole life cycle, stands for 40% of total EU energy consumption. Both transportation and food production consume less energy than our buildings.

An energy management gateway may be used to control the power loads of different electrical devices in e.g. a house. Some devices (e.g. lamps and devices in stand-by mode) may be cut off from electrical supply e.g. when no-one is home, and some devices (e.g. washing machine) can be allowed to run only during the night when the energy price is lower.

There is today no straight forward way of associating a typical electricity consuming device with a specific outlet or changing that existing device association for the user, e.g. the user might redecorate the living room so that the outlet used for the TV now is used for the floor lamp. Since the TV is a load with a stand-by consumption, the TV device load can be configured to be turned off when there is nobody at home. To be able to do this, the control logic of the gateway has to know what outlet the TV is connected to. Visualization of electricity consuming devices has to know what outlet is associated with what device; otherwise the floor lamp consumption would be visualized as the TV consumption after the redecorating. A user can have several devices of the same type, e.g. a lamp, therefore the user may additionally be able to give the outlet a specific name (e.g. living room floor lamp).

WO 2011/064535 discloses an energy management system where information about the type of electrical device is communicated via the earth-pin of a UK plug to a central processing unit of the system. This allows the processing unit to control each device's connection to the power supply.

KR 2011/0002725 discloses a management device which identifies an electric device based on its power consumption and presents this information to a user which can input commands to control the power consumption of the device.

### SUMMARY

It is an objective of the present invention to alleviate a problem of the prior art as regards associating an electricity outlet socket with a load type for an energy management system comprising an energy management gateway.

According to an aspect of the present invention, there is provided a method of an energy management gateway comprising a storage unit and a user interface, and being associated with an electricity meter and with a plurality of electricity outlet sockets, the method comprising: detecting a pattern of consumption of electricity originating from one of the outlet sockets by means of the electricity meter; identifying the outlet socket from which the pattern originates; determining that the detected pattern fulfils a criterion stored in the storage unit, whereby the pattern is recognised as a pattern formed by an association device connected to said outlet socket; outputting via the user interface an indication that the identified outlet socket is ready to be associated with an electrical load type; receiving via the user interface an indication about with which electrical load type the identified outlet socket should be associated; and associating the identified outlet socket with the load type in accordance with the received indication.

According to another aspect of the present invention, there is provided a computer program product comprising computer-executable components for causing an energy management gateway to perform an embodiment of a method of the present disclosure when the computer-executable components are run on a processor comprised in the gateway.

According to another aspect of the present invention, there is provided a computer program for an energy management gateway comprising a storage unit and a user interface, and being associated with an electricity meter and with a plurality of electricity outlet sockets, the computer program comprising computer program code which is able to, when run on a processor of the gateway, cause the gateway to: detect a pattern of consumption of electricity originating from one of the outlet sockets by means of the electricity meter; identify the outlet socket from which the pattern originates; determine that the detected pattern fulfils a criterion stored in the storage unit, whereby the pattern is recognised as a pattern formed by an association device connected to said outlet socket; output via the user interface an indication that the identified outlet socket is ready to be associated with an electrical load type; receive via the user interface an indication about with which electrical load type the identified outlet socket should be associated; and associate the identified outlet socket with the load type in accordance with the received indication.

According to another aspect of the present invention, there is provided a computer program product comprising an embodiment of a computer program of the present disclosure and a computer readable means on which the computer program is stored.

According to another aspect of the present invention, there is provided an energy management gateway associated with an electricity meter and a plurality of electricity outlet sockets, the gateway comprising: means for detecting a pattern of consumption of electricity originating from one of the outlet sockets; means for identifying the outlet socket from which the pattern originates; means for determining that the detected pattern fulfils a criterion, whereby the pattern is recognised as a pattern formed by an association device connected to said outlet socket; means for outputting via the user interface an indication that the identified outlet socket is ready to be associated with an electrical load type; means for receiving via the user interface an indication about with which electrical load type the identified outlet socket should be associated; and means for associating the identified outlet socket with the load type in accordance with the received indication.

According to another aspect of the present invention, there is provided an energy management gateway associated with an electricity meter and with a plurality of electricity outlet sockets, the gateway comprising: a processor; a user interface; and a storage unit storing instructions that, when executed by the processor, cause the gateway to: detect a pattern of consumption of electricity originating from one of the outlet sockets by means of the electricity meter; identify the outlet socket from which the pattern originates; determine that the detected pattern fulfils a criterion stored in the storage unit, whereby the pattern is recognised as a pattern formed by an association device connected to said outlet socket; output via the user interface an indication that the identified outlet socket is ready to be associated with an electrical load type; receive via the user interface an indication about with which electrical load type the identified outlet socket should be associated; and associate the identified outlet socket with the load type in accordance with the received indication.

According to another aspect of the present invention, there is provided an association device configured for being connected to an electricity outlet socket, and for consuming electricity from the outlet in a pattern for allowing an energy management gateway to, by recognising the pattern, identify the outlet socket to which the association device is connected.

It is an advantage of the present invention according to any of the aspects above that an electrical outlet socket can easily be associated with a load type of the electrical device connected to the socket, e.g. TV, lamp, kitchen appliance etc. By allowing electricity to be consumed from the socket in a certain pattern, the gateway knows that this is the socket for which a load type will/should now be inputted by a user of the gateway via the user interface. The consumption pattern may suitably be made by means of an association device connected to the socket. Thus, the gateway does not have to guess the load type e.g. based on the electricity consumption of an electrical device connected to the socket. Since it has thus been made more easy to associate a socket with a load type, it is also more easy to change the associations e.g. if a lamp is moved from one socket to another.

In some embodiments, the gateway provides electrical power to the identified outlet socket in accordance with a pre-defined rule for the associated load type. For example, the electricity flow to sockets with a load type of stand-by devices such as a TV, as well as load type(s) of lamps, may be stopped during hours when the gateway has been programmed that the user is not at home or e.g. upon locking the front door from the outside. Other sockets e.g. for load type(s) of dishwasher and washing machine may only be provided with an electricity flow in the evening or night time when the electricity price is lower. There are of course many other rules which may be used depending on the design of the gateway and the needs of the user.

In some embodiments, the user interface comprises a touch screen. By means of the touch screen, the user can then easily input the load type into the gateway, e.g. from a list presented on the touch screen of the gateway, for the socket activated for association by the pattern. Alternatively, another type of graphical user interface (UI) may be comprised in the UI of the gateway, and the selection of load type may be made by means of buttons also associated with the UI.

In some embodiments, the user interface is connectable to a wireless user equipment, e.g. a mobile phone or portable computer. This may allow a user to input commands and/or preferences, such as associating a load type to the socket, to the gateway via a wireless user equipment (UE) over a radio interface. The UE may e.g. be a regular smartphone or computer of the user, possibly running an application designed for interacting with the gateway, or connected to such an application via the internet. The gateway may then not need a screen or such to present information to the user. Instead, such information may be presented on a screen of the UE by means of the application.

In some embodiments, each of the plurality of electricity outlet sockets is associated with a respective electricity meter. The storage unit of the gateway holds information about with which electricity meter each of the outlet sockets is associated. The identification of the outlet socket then comprises identifying the electricity meter by means of which the pattern is detected. This is a simple way of enabling measurement of the electrical flow to the respective sockets and for the gateway to identify the socket of the pattern.

In some embodiments, the determining that the detected pattern fulfils a criterion comprises comparing the detected pattern with a pattern stored in the storage unit, and determining that the detected pattern corresponds with the stored pattern. The pattern may be identical or it may be sufficiently similar to the stored pattern. The pattern may e.g. be a series of consumption pulses or such which repeats in a cyclic fashion, or any other type of pattern. Alternatively or additionally, the criterion may comprise e.g. that the electricity consumption goes above or below a threshold value or that a consumption pulse within a pre-defined duration interval is detected.

In some embodiments, the electrical load type is one of a plurality of predefined electrical load types. The gateway may e.g. be pre-programmed with a list of different load types, each of which are associated with rules for the energy management thereof. It may be advantageous that the load types are predefined, to facilitate the gateway associating the proper energy management rules to the respective load types.

In some embodiments, a name for the identified outlet socket is also received via the user interface together with the received indication. Since a plurality of sockets may be associated with the same load type, e.g. a "lamp" load type, it may be convenient to allow the user to also associate a name to the socket, typically a name indicating the electrical device intended to be connected to the socket, e.g. "living room floor lamp". The name may be arbitrarily chosen by the user and may then be used in communication with the user over the UI to easily identify the different sockets to the user.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

The invention is now described, by way of example, with reference to the accompanying drawings, in which:
Fig 1 is a schematic block diagram of an embodiment of an energy management system of the present invention.
Fig 2 is a schematic block diagram of an embodiment of an energy management gateway of the present invention.
Fig 3 is a schematic block diagram of an embodiment of a storage unit of the gateway of figure 2.
Fig 4 is a schematic diagram illustrating a specific embodiment of an energy management system of the present invention.
Fig 5 is a schematic flow chart of an embodiment of a method of the present invention.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

The energy management gateway may be any suitable gateway able to control the flow of electricity to each of the sockets associated with it, by means of energy management system (EMS) logic or other software (SW). In some embodiments, the gateway may be able to communicate with an external service provider, e.g. for demand response signalling. The gateway may e.g. be an Energy Service Interface/ Home Area Network (ESI/HAN) gateway. The gateway may be located at the premises of a user. The gateway may hold EMS logic for controlling/monitoring electrical load(s) at the user premises according to its configuration mode. The premises may e.g. be a residential or industrial building or other facility. The gateway may in some embodiments also involve control of charging or discharging of local electricity storage such as batteries or the like, and/or of local energy production e.g. solar or wind power equipment at the user premises.

The electricity meter may be any meter able to detect and quantify a flow of electrical energy. The meter may e.g. be a volt meter and/or an ampere meter. The electricity meter may be comprised in the gateway, or it may be separate from the gateway but associated with the gateway and able to send measurement readings to the gateway. The meter may be dedicated to measuring electrical flow to a specific outlet socket, whereby each socket is associated with a respective meter, or the meter may be able to measure electrical flow to several or all of the sockets associated with the gateway, in which case it may be able to distinguish which measurement relates to which socket.

The electricity outlet sockets are any kind of sockets into which electrical devices may be plugged in, in order for electrical power to be provided to the devices via the sockets. The socket may e.g. be a standard wall socket of a building, or a socket in a ceiling for connecting hanging lamps, or a socket for permanent/fixed installation of e.g. electrical appliances in wet areas.

A computer program product, as discussed herein, comprises a computer readable medium holding a computer program or SW in the form of computer-executable components or instructions. The computer program may be configured to cause an energy management gateway to perform an embodiment of a method discussed herein. The computer program may be run on a processor of the gateway for causing the gateway to perform the method. The computer program product may e.g. be or be comprised in a storage unit or memory comprised in the gateway and associated with the processor. Alternatively, the computer program product may be, or be part of, a separate, e.g. mobile, storage means, such as a computer readable disc, e.g. CD or DVD or hard disc/drive, or a solid state storage medium, e.g. a RAM or Flash memory.

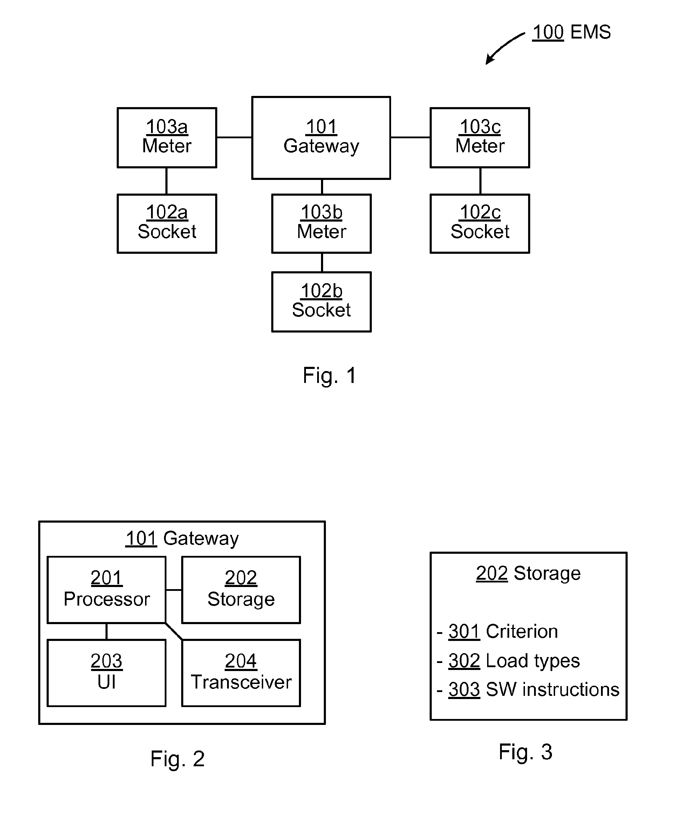

Figure 1 schematically illustrates an embodiment of an energy management system 100 of the present invention. An energy management gateway 101 is connected to, or otherwise associated with, a plurality of electricity outlet sockets 102. Here three sockets 102a-c are shown as simplified example. In the embodiment of figure 1, the gateway 101 is connected to the sockets via a respective electricity meter 103 (here 103a-c, corresponding to the sockets 102a-c).

Figure 2 schematically illustrates an embodiment of an energy management gateway 101. The gateway 101 comprises a processor 201 e.g. a central processing unit (CPU). The processor 201 may comprise one or a plurality of processing units in the form of microprocessor(s). However, other suitable devices with computing capabilities could be comprised in the processor 201, e.g. an application specific integrated circuit (ASIC), a field programmable gate array (FPGA) or a complex programmable logic device (CPLD). The processor 201 is configured to run one or several computer program(s) or software (here generally called instructions) stored in a storage unit 202 e.g. a memory. The storage unit 202 is regarded as a computer readable means and may e.g. be in the form of a Random Access Memory (RAM), a Flash memory or other solid state memory, or a hard disk, or a combination thereof. The processor 201 is also configured to store data in the storage unit 202, as needed. The gateway 101 may also comprises a transmitter and a receiver (e.g. for any communication with an external service provider, e.g. demand response), and optionally (if the gateway is configured for communication over a radio interface) an antenna, which may be combined to form a transceiver 204 or be present as distinct units within the gateway 101. The transmitter (if present) is configured to cooperate with the processor to transform data bits to be transmitted e.g. over a radio interface to a suitable radio signal in accordance with the radio access technology (RAT) used by the Radio Access Network (RAN) via which the data bits are to be transmitted. The receiver (if present) is configured to cooperate with the processor 201 to transform e.g. a received radio signal to transmitted data bits. The antenna, if used, is used by the transceiver 204 for transmitting and receiving, respectively, radio signals. The gateway 101 also comprises a user interface (UI) 203 comprised in or in cooperation with the processor 201 for e.g. allowing a user to input preferences and/or other commands or information, e.g. associating a socket with a load type (and possibly also a name) as discussed herein, into the gateway 101. The UI 203 may e.g. be a graphical user interface (GUI) and/or a UI connectable to a UE.

Figure 3 schematically illustrates an embodiment of the storage unit 202 of the gateway 101 of figure 2. The storage unit 202 holds the criterion 301 which, if fulfilled, allows the gateway to recognise that the detected pattern is formed by the association device. The storage unit 202 may also hold a list of predefined load types 302, each load type implying how the gateway should manage electricity flow to the socket to which an electrical device corresponding to the load type is connected. The storage unit also comprises software (SW) instructions 303, e.g. EMS logic for controlling the loads of the electrical devices connected to the sockets 102. The instructions 303 may also be for additional running/controlling the gateway 101 when the instructions 303 are executed by the processor 201. The criterion 301 and/or the load types 302 may be part of the instructions 303.

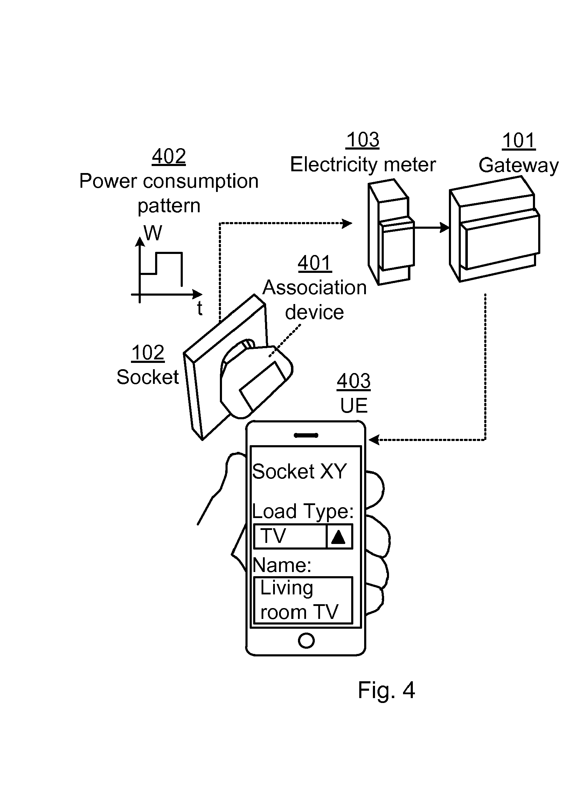

Figure 4 schematically illustrates a more specific example of an EMS 100. An association device 401, e.g. a plug, is connected to (put in) the socket 102 by a user. In the socket 102, the association device 401 consumes electricity in a predefined pattern 402. The electricity consumption (flow) of the socket 102 is (continuously, periodically or intermittently) measured by the electricity meter 103 associated with both the socket 102 and the gateway 101. The gateway 101 obtains information from the meter 103 about the measured consumption of the socket 102, whereby it can recognise the pattern 402. The gateway 101 then outputs, via its UI 203, an indication to the user that it is ready to receive input about the load type of the socket 102. In the embodiment of figure 4, the indication is outputted to a UE 403 in the form of a smartphone running an application software which allows it to, via a suitable GUI of the UE 403, communicate with the gateway 101. According to this embodiment, in the GUI, the socket code (the index of the socket as known to the gateway), here illustrated with XY, is shown and the user is allowed to choose a suitable load type, e.g. "TV", from a pull-down menu, or the like. The user may also be allowed to input a name for the electrical device connected to the socket, e.g. "Living room TV", which makes the socket more easily identified to the user than the socket code XY.

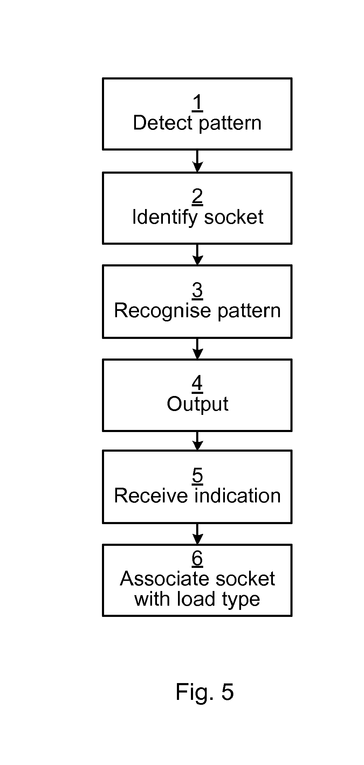

Figure 5 is a schematic flow chart of an embodiment of a method of the present invention. The gateway 101 detects 1 a pattern of consumption of electricity originating from one of the outlet sockets by means of the electricity meter. The gateway 101 then identifies 2 the outlet socket from which the pattern originates. If the gateway determines that the detected pattern fulfils a criterion stored in the storage unit, the pattern is recognised 3 as a pattern formed by an association device connected to said outlet socket. Via the UI 203, the gateway then outputs 4, e.g. to a display/GUI or a UE 403, an indication that the identified outlet socket 102 is ready to be associated with an electrical load type. In response to the outputted 4 indication, the gateway 101 receives 5, via the UI 203, an indication about with which electrical load type the identified outlet socket should be associated. The gateway then associates 6 the identified socket 102 with the load type 302 in accordance 5 with the received indication.

### Example

In this example, an association device 401 is plugged into an outlet socket 102 and there starts to consume electrical power according to a unique power consumption pattern 402. Moreover, an outlet socket name association application is used, which provides a GUI that allows users to choose a device name and load type 302 of the device to be connected to the outlet socket 102. The example assumes that the socket electricity consumption is measured by a electricity meter 102 connected to the gateway 101, which holds information about with which socket 102 each of the meters 103 is associated. Below follows a method step sequence of the example.
- The user plugs the association device 401 into the outlet socket 102 in order for the socket to be associated with an electricity consuming device load type and name.
- The association device 401 starts consuming electrical power according to a unique load pattern 402.
- The meter 103 connected to the outlet socket 102 records the load pattern 402.
- The gateway 101 holds an association between electricity meter 103 and the outlet socket 102.
- The gateway 101 connected to the meter 103 stores the association device load pattern 402.
- The gateway 101 sends an event to an outlet socket name association application, e.g. of a UE 403, that outlet XY requests a name and a load type association.
- The outlet socket name association application reacts on the event and enables the user to do the name and load type association, e.g. through a user interface on a smart phone or any other gateway connected display
- The user selects a device load type 302 association from a pre-defined list. The list is pre-defined so that the EMS logic 303 knows e.g. what devices are typical stand-by loads or loads that shouldn't be turned off, e.g. a router might not be a load that the user wants to turn off when leaving home.
- The user enters a name for the device connected to the outlet by own choice. This name is arbitrary and used when communicating with the user.

The invention of the example is characterised e.g. by:
- The user can easily do a name and load type association for each power consuming device connected to an outlet socket 102 that is measured for its power consumption by an electricity meter 103.
- The name and load type association can be updated at any time.
- The association device 401 does not need any complicated logic since it simply consumes a load according to a unique pattern 402.
- The user can stand in front of the outlet socket 102 and interact with the name and type association app of a UE 403 of the user.
- The name and load type association is stored in the storage unit 202 of the gateway 101 and can be used for load control and load visualization
- The pre-defined list of load types 302 enables the gateway 101 to know which outlet sockets 102 are e.g. typical stand-by loads that can be turned off when the user leaves home.

Outlet sockets 102 in home automation systems are typically not associated with any energy management logic since it is complicated to associate the socket with a certain load type 302. The present invention has at least the following advantages:
- Simple and fast user defined load type of the electrical device that is to be connected to the socket.
- More accurate user control for reduced environmental impact and cost impact of the outlet load since the control is adapted to what type of load is to be connected to the socket.

The invention has above mainly been described above with reference to a few embodiments. However, as is readily appreciated by a person skilled in the art, other embodiments than the ones disclosed above are equally possible within the scope of the invention, as defined by the appended patent claims.

## Claims

1. A method of an energy management gateway (101) comprising a storage unit (202) and a user interface (203), and being associated with an electricity meter (103) and with a plurality of electricity outlet sockets (102), the method comprising:
detecting (1) a pattern (402) of consumption of electricity originating from one of the outlet sockets by means of the electricity meter;
identifying (2) the outlet socket (102) from which the pattern originates;
determining that the detected pattern (402) fulfils a criterion (301) stored in the storage unit (202), whereby the pattern is recognised (3) as a pattern formed by an association device (401) connected to said outlet socket;
outputting (4) via the user interface (203) an indication that the identified (2) outlet socket is ready to be associated with an electrical load type (302);
receiving (5) via the user interface (203) an indication about with which electrical load type the identified outlet socket should be associated; and
associating (6) the identified (2) outlet socket (102) with the load type (302) in accordance with the received (5) indication.

2. The method of claim 1, further comprising:
providing electrical power to the identified outlet socket (102) in accordance with a pre-defined rule for the associated load type (302).

3. The method of any preceding claim, wherein the user interface (203) comprises a touch screen.

4. The method of any preceding claim, wherein the user interface (203) is configured for communication with a wireless user equipment (403) such that the received (5) indication is received from said user equipment via a radio interface.

5. The method of any preceding claim, wherein each of the plurality of electricity outlet sockets (102) is associated with a respective electricity meter (103) and wherein the storage unit (202) holds information about with which electricity meter each of the outlet sockets is associated, the identification (2) of the outlet socket comprising identifying the electricity meter by means of which the pattern (402) is detected.

6. The method of any preceding claim, wherein the determining that the detected pattern (402) fulfils a criterion (301) comprises comparing the detected pattern with a pattern stored in the storage unit (202), and determining that the detected pattern corresponds with the stored pattern.

7. The method of any preceding claim, wherein the electrical load type (302) is one of a plurality of predefined electrical load types.

8. The method of any preceding claim, wherein a name for the identified outlet socket (102) is also received (5) via the user interface (203) together with the received indication.

9. A computer program product comprising computer-executable components for causing an energy management gateway (101) to perform the method of any one of claims 1-8 when the computer-executable components are run on a processor (201) comprised in the gateway.

10. A computer program (303) for an energy management gateway (101) comprising a storage unit (202) and a user interface (203), and being associated with an electricity meter (103) and with a plurality of electricity outlet sockets (102), the computer program comprising computer program code which is able to, when run on a processor (201) of the gateway, cause the gateway to:
detect (1) a pattern (402) of consumption of electricity originating from one of the outlet sockets by means of the electricity meter;
identify (2) the outlet socket from which the pattern originates;
determine that the detected pattern fulfils a criterion (301) stored in the storage unit, whereby the pattern is recognised (3) as a pattern formed by an association device (401) connected to said outlet socket;
output (4) via the user interface an indication that the identified (2) outlet socket is ready to be associated with an electrical load type (302);
receive (5) via the user interface an indication about with which electrical load type the identified outlet socket should be associated; and
associate (6) the identified (2) outlet socket with the load type in accordance with the received (5) indication.

11. A computer program product comprising a computer program according to claim 10 and a computer readable means (202) on which the computer program is stored.

12. An energy management gateway (101) associated with an electricity meter (103) and a plurality of electricity outlet sockets (102), the gateway comprising:
means (201) for detecting (1) a pattern (402) of consumption of electricity originating from one of the outlet sockets;
means (201) for identifying (2) the outlet socket from which the pattern originates;
means (201) for determining that the detected pattern fulfils a criterion (301), whereby the pattern is recognised (3) as a pattern formed by an association device (401) connected to said outlet socket;
means (201) for outputting (4) via the user interface an indication that the identified outlet socket is ready to be associated with an electrical load type (302);
means (201) for receiving (5) via the user interface an indication about with which electrical load type the identified outlet socket should be associated; and
means (201) for associating (6) the identified (2) outlet socket with the load type in accordance with the received (5) indication.

13. An energy management gateway (101) associated with an electricity meter (103) and with a plurality of electricity outlet sockets (102), the gateway comprising:
a processor (201);
a user interface (203); and
a storage unit (202) storing instructions (303) that, when executed by the processor, cause the gateway to:
detect (1) a pattern (402) of consumption of electricity originating from one of the outlet sockets by means of the electricity meter;
identify (2) the outlet socket from which the pattern originates;
determine that the detected (1) pattern fulfils a criterion (301) stored in the storage unit, whereby the pattern is recognised (3) as a pattern formed by an association device (401) connected to said outlet socket;
output (4) via the user interface an indication that the identified outlet socket is ready to be associated with an electrical load type (302);
receive (5) via the user interface an indication about with which electrical load type the identified outlet socket should be associated; and
associate (6) the identified (2) outlet socket with the load type in accordance with the received (5) indication.

14. An association device (401) configured for being connected to an electricity outlet socket (102), and for consuming electricity from the outlet in a pattern (402) for allowing an energy management gateway (101) to, by recognising (3) the pattern, identify (2) the outlet socket to which the association device is connected.
